# EUROPEAN PATENT APPLICATION

(11) **EP 1 095 573 A2**
(43) Date of publication of application: **02.05.2001**
(21) Application number: 00500211.8
(22) Date of filing: 11.10.2000
(51) Int. Cl.: A23N 12/02

(54) **Automatic dosing device of phytosanitary products for treating fruit after the harvest**

(30) Priority: 11.10.1999 ES 9902552 U; 10.10.2000 ES 200002467 U
(71) Applicant: Elf Atochem-Agri Espana, S.A., 46980 Paterna (Valencia) (ES)
(72) Inventor: Egea Blasco, Javier, 46230 Alginet (Valencia) (ES); Correas Lopez, José Luis, 46015 Valencia (ES)
(74) Representative: Ungria Lopez, Javier

(57) **Abstract**

It is applicable to conventional devices (1) for treating fruit by showering with a mixture of phytosanitary products and water. It comprises a main tank (4) with a water inlet (6) with an electrovalve (5) and a flow meter (15) in order to fill it with the amount of water to be added to the mixture. The device (4) is connected at least to one dosing device (9), which is in turn connected to a phytosanitary product tank (8a-8n) in order to make the mixture with water according to the required proportions, all controlled by a control circuit (13).

It indicates when any of the phytosanitary product tanks (8a-8n) is almost empty, at the same time that it deactivates the operation of the device (1).

It permits the correct treatment of fruit maintaining the suitable level of the mixture.

## Description

### OBJECT OF THE INVENTION

The invention in question is applicable to any type of device of those conventionally used to apply fungicides, such as for example phytosanitary products, by means of showering the fruit. The purpose of the invention is to make the mixture of phytosanitary products and water totally automatically and to apply said mixture to the conventional device, also in a totally automatic manner.

### BACKGROUND OF THE INVENTION

The prior art contains several devices for treating fruit after the harvest by means of showering the fruit with a mixture comprised of phytosanitary products mixed with water.

These devices are comprised of a tank which stores the initial mixture and by a cabin in which the fruit in pallets is generally introduced, and that permits the showering of the fruit.

These devices are filled with water and with the corresponding dose of phytosanitary product when the working session begins and a mixture that is used to shower the fruit is obtained. As the fruit is treated, there is a forced loss of mixture as it is deposited on the treated fruit.

Furthermore, reiterated use of the excess mixture used in the showering does not guarantee correct treating of the fruit since the mixture degrades with the passing of the fruit.

For this reason, it is necessary to provide a new mixture of water and phytosanitary product or products in suitable portions.

Nowadays there is no device that carries out this operation automatically.

### DESCRIPTION OF THE INVENTION

The invention consists of a dosing device that makes the mixture totally automatically and applies it in the exact amount to a conventional device by means of which the showering is carried out, guaranteeing the effectiveness of the treatment and the level of mixture inside the tank of the device that carries out the application, in such a way that said level can be minimum and stable, irrespective of the amount of fruit treated.

In order to achieve these purposes, the invention is characterized in that it has at least one main tank that is connected to the water system by means of an electrovalve and a flow meter so that by means of a control circuit the water intake is controlled in an exact amount.

Furthermore, the main tank is connected to at least one dosing device, which in turn is connected to a tank, a commercial container or other that contains the phytosanitary product.

In order to guarantee the amount of mixture of the phytosanitary products and water and the concentration thereof, there are some level probes that can operate electrically, optically, mechanically, by ultrasound or other means.

In one embodiment of the invention the dosing means is comprised of a cylinder and the corresponding piston, that constitutes a pneumatic adjustable stroke actuator, and that is moved by an energy source that may be electric, pneumatic, hydraulic, etc., or actuated manually, and permits by means of adjustment of its stroke the exact dosing of the phytosanitary product or products that should be mixed with water. There is the possibility that the dosing means is comprised of any other device that carries out this function such as for example dosing pumps, proportional mixers or others.

The application of the phytosanitary product to the main device is carried out by the control of the control circuit in order to make the mixture with the water in the main tank. Therefore, the dose of phytosanitary product diluted in water as well as the amount of water is always the same and great precision is obtained by means of the above-mentioned adjustment of the stroke of the pistons.

The number of main tanks where the mixture is made can be variable depending on the technical characteristics of the showering equipment, and this tank could even be eliminated in the event, for example, of dosing by a proportional pump.

In the preferred embodiment of the invention, the main tank has enough capacity so that the amount of mixture that is lost when treating the fruit can be replaced.

Furthermore, the invention provides for the inclusion of nonreturn valves in the connection between the dosing device and the main tank, as well as the connection between the dosing device and the phytosanitary product tank; in such a way that when the phytosanitary product is sucked in and expelled the suitable path is carried out without there being any possible return. There is the possibility of carrying out dosing by weight, by flow measuring, by gravity, etc.

By means of the control circuit, whose energy source may be electric, pneumatic, etc., or by hand operation, the filling of the main tank up to the necessary amount is controlled simultaneously, sequentially or randomly. Then the dose of phytosanitary product is injected into the main tank and the mixture made is injected by gravity, by injection of compressed air or by any other means into the conventional device by means of which the showering of the fruit is carried out. In one embodiment of the invention between the main tank and the conventional device there is a valve whose state is controlled by the control circuit which carries out the opening of said valve when the showering device starts to operate, obviously after the main tank has been filled with the mixture made in the required proportions.

In another embodiment of the invention between the main tank and the conventional device there is a nonreturn valve for which purpose in this case the main tank is connected to an air inlet in which an electrovalve that is controlled by the control circuit, just like the rest of the elements, is inserted, in order to permit the intake of compressed air into the main tank, in such a way that the emptying thereof is forced.

In one embodiment of the invention, the outlet of the main tank is applied directly to the outlet of the pump provided for in the conventional showering device.

In another embodiment of the invention the main tank is connected before the pump provided for in the showering device.

In a third embodiment of the invention the outlet of the main tank, aside from being connected according to any of the two preceding possibilities, is also connected to the tank of the conventional showering device, in order to permit the possibility that the control circuit permits the conventional showering device to be filled automatically. This operation would be carried out for example when the tank of the showering device is empty in such a way that the control circuit is provided with means so that from the measurements obtained from the flow meter, the tank of the conventional device can be filled.

The obvious thing is that the level probes applied to the tank of the conventional device can also be used to apply the mixture to the conventional device as long as the level drops below a certain value.

In one embodiment of the invention the control circuit is related to optical-acoustic means in order to indicate when the containers of the phytosanitary product are almost empty, which is detected by means of the cited level probes.

Furthermore in one embodiment of the invention the control circuit of the device of the invention is connected to the control circuit of the conventional showering device, in such a way that when it detects that any of the phytosanitary product tanks is almost empty, it stops the conventional showering device.

It should also be pointed out that the control circuit of the device of the invention permits independent operating management of each one of the dosing devices, in such a way that the inclusion of different phytosanitary products can be selected, stopping the operation of the dosing device whose phytosanitary product is not needed depending on the needs required to treat each type of fruit, or else in order to carry out cleaning or draining processes of any of the independent circuits of each dosing device.

Hereinafter in order to provide a better understanding of this specification and forming an integral part thereof, a single figure in which the object of the invention has been represented in an illustrative and non-restrictive manner, is attached hereto:

### BRIEF DESCRIPTION OF THE FIGURE

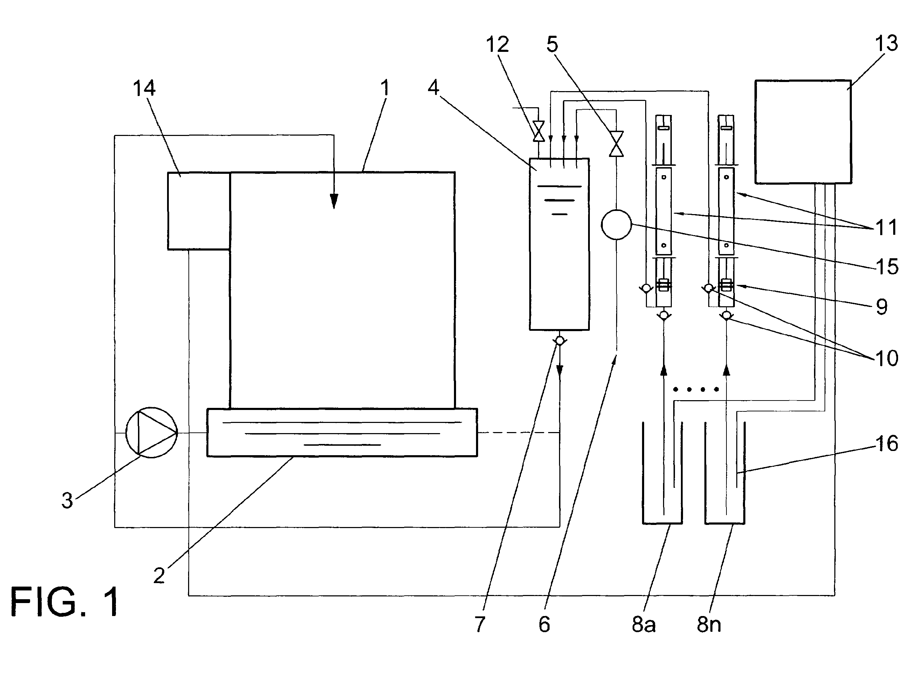

Figure 1 shows a schematic diagram of the device object of the invention and of its connection to the conventional device by means of which the fruit is treated.

### DESCRIPTION OF THE PREFERRED EMBODIMENT

A description of the invention based on the above-cited figure is made hereinafter.

Hence, the device of the invention is applied to any type of conventional device (1), of the type that has a cabin under which there is a tank (2), in which a mixture of phytosanitary product and water is stored. The mixture of the phytosanitary product stored in the tank (2) is applied by means of a pump (3) to the cabin of the device (1), and this is all controlled by a control circuit (14).

The device of the invention has a main tank (4) that is connected by means of an electrovalve (5) and a flow meter (15) to the water system (6).

Furthermore the main tank (4) is connected to a series of dosing devices (9), which in turn are connected to a phytosanitary product tank (8a-8n). The number of phytosanitary product tanks depends on the number of these products that should be mixed.

Nonreturn valves (10) have been provided for in the connection between the main tank (4) and the dosing devices (9), as well as between these dosing devices and the phytosanitary product tanks (8a-8n).

The device (4) is connected to the outlet of the pump (3) of the device (1) by means of a nonreturn valve (7).

The dosing devices (9) are comprised of some cylinders with pneumatic actuators (11), whose stroke is adjustable in order to suck the required amount of phytosanitary product.

The described elements are controlled by a control circuit (13), in such a way that in order to obtain the treatment mixture, consisting of the mixture of phytosanitary products and water, the control circuit actuates the electrovalve (5) opening it, in such a way that it permits the passing of the water to the inside of the tank (4), and by means of the flow meter (16) the control circuit (13) knows exactly the amount of water that should be applied to the mixture, in such a way that when it detects that said amount has entered into the tank (4), the electrovalve (5) closes. The control circuit (13) simultaneously activates the pneumatic actuators (11) that produce the suction of the fungicide stored in the corresponding tank (8a-8n), up to the required amount by means of the adjustment of the stroke of the pneumatic actuators (11).

These operations are carried out efficiently by the arrangement of the nonreturn valves (10), that allow the fungicide to be sucked and expelled towards the desired place.

Furthermore, the control circuit (13) of the device of the invention is connected to the control circuit (14) of the conventional device (1), in such a way that when this conventional device starts operating, this is detected by the control circuit (13) which produces the opening of the nonreturn valve (7) emptying the main tank (4), previously filled with the mixture of water and the fungicide or fungicides, just as it has been previously described.

Moreover, in each one of the tanks (8a-8n) there is a level probe (16), each one of which is connected to the control circuit (13), in such a way that when a probe (16) detects that the corresponding container of phytosanitary product is almost empty, it generates a signal that is picked up by the control circuit (13), which in turn activates an optical and/or acoustic device, included therein, in order to indicate this circumstance at the same time that the device (1) is stopped actuating on its control circuit (14), avoiding that the mixture is degraded.

In one embodiment of the invention, in order to facilitate the emptying of the tank (4), at the same time that the nonreturn valve (7) opens, the opening of the electrovalve (12) takes place, carrying out the injection of air into the tank (4), producing the emptying by means of the injection of compressed air.

There is the possibility that the tank (2) is connected to the tank (4) so that in the event that the tank (2) of the device (1) is totally empty, the tank can be filled by means of the dosing device, in which case the dosing device initially provides a number of emptyings of the tank (4) equivalent to the volume of the tank (2), in such a way that the control circuit (13) stores the volume of the tank (12) and knows when it is full by means of the measurement made by the flow meter (15). The connection of the tank (4) to the tank (2) has been represented in the figure by means of a dash line.

Once the tank (2) has been filled, the mixture made in the tank (4) is applied directly to the shower of the device (1) by injection of compressed air as indicated above, in such a way that the loss and degradation of the mixture when adding a new mixture is prevented.

The emptying of the main tank (4) is controlled by means of the corresponding level probe or timer, and once the main tank (4) has been emptied, the nonreturn valve (7) closes again and the cycle is repeated automatically in order to prevent the loss and degradation of the mixture.

The emptying of the main tank (4) can also be done by means of the pump (3) of the device (1), since the pump can be connected directly to the outlet of the main tank (4).

Level probes can also be included in the tank (2).

## Claims

1. Automatic dosing device of phytosanitary products for treating fruit after the harvest, applicable to any type of conventional device (1) of those used to treat fruit by means of showering with a mixture of phytosanitary products and water that comprises a tank (2), a pump (3), a cabin and a control circuit (14) characterized in that it has at least one main tank (4) that is connected to the water system (6) by means of an electrovalve (5) in order to carry out the filling of the main tank (4), which is also connected to at least one dosing device (9) that is in turn connected to a phytosanitary product tank (8a-8n) in order to make the mixture with water; the main tank (4) being connected to the device (1) in order to produce the showering of the fruit by means of the phytosanitary product, all of this controlled by a control circuit (13).

2. Automatic dosing device of phytosanitary products for treating fruit after the harvest, according to claim 1, characterized in that the connection of the main tank (4) to the device (1) is carried out directly to the outlet of a pump (3) incorporated in the conventional device (1).

3. Automatic dosing device of phytosanitary products for treating fruit after the harvest, according to claim 1, characterized in that the connection of the main pump to the device (1) is carried out on its tank (2).

4. Automatic dosing device of phytosanitary products for treating fruit after the harvest, according to claims 2 and 3, characterized in that the connection of the main tank (4) to the device (1) is carried out by means of an electrovalve controlled by the control circuit (13).

5. Automatic dosing device of phytosanitary products for treating fruit after the harvest, according to claims 2 or 3, characterized in that the connection of the main tank to the device (1) is carried out by means of a nonreturn valve (7).

6. Automatic dosing device of phytosanitary products for treating fruit after the harvest, according to claim 1, characterized in that there are level probes of the emptying of the fungicide tanks (8a-8n) which by means of the control circuit (13) are connected to optical/acoustic means in order to indicate when a container of fungicide (8a-8n) is almost empty, and in that the control circuit (13) of the automatic dosing device is connected to the control circuit (14) of the device (1), the control circuit (13) including means so that upon detecting the lack of phytosanitary product in any of the tanks (8a-8n) the operation of the device (1) is deactivated.

7. Automatic dosing device of phytosanitary products for treating fruit after the harvest, according to claim 1, characterized in that in the connection between the dosing device (9) and the main tank (4), and in the connection between the dosing device (9) and the fungicide tank (8a-8n), nonreturn valves (10) are inserted.

8. Automatic dosing device of phytosanitary products for treating fruit after the harvest, according to claim 1, characterized in that the dosing devices are defined by some cylinders with pneumatic adjustable stroke actuators (11) in order to adjust the dose.

9. Automatic dosing device of phytosanitary products for treating fruit after the harvest, according to claim 1, characterized in that there are means for detecting the filling and emptying of water of the main tank (4), means that are comprised of the following elements among: a timer, level probes connected to the control circuit (13).

10. Automatic dosing device of phytosanitary products for treating fruit after the harvest, according to claim 1, characterized in that the main tank (4) has a capacity at least equal to the amount of phytosanitary produced used to shower the fruit.

11. Automatic dosing device of phytosanitary products for treating fruit after the harvest, according to claim 1, characterized in that the control circuit (13) of the automatic dosing device has control means independent from the operation of each one of the dosing devices (9) in order to be able to select different phytosanitary products according to the required needs.

12. Automatic dosing device of phytosanitary products for treating fruit after the harvest, according to claim 1, characterized in that a flow meter (15) is inserted in the water inlet (6) in order to permit the amount of water included in the mixture to be adjusted exactly.

13. Automatic dosing device of phytosanitary products for treating fruit after the harvest, according to claim 1, characterized in that the main tank (4) is connected to a compressed air circuit, by means of an electrovalve (12) that is controlled by the control circuit (13) in order to facilitate the emptying of the tank (4) by means of the injection of compressed air.

14. Automatic dosing device of phytosanitary products for treating fruit after the harvest, according to claims 3 and 13, characterized in that the control circuit (13) has means so that from the data obtained from the flow meter (15) the filling of the tank (2) of the conventional device (1) is carried out when the tank (2) is empty.
